# EUROPEAN PATENT SPECIFICATION

(11) **EP 2 075 886 B1**
(45) Date of publication and mention of the grant of the patent: **28.11.2012**
(21) Application number: 07380392.6
(22) Date of filing: 27.12.2007
(51) Int. Cl.: H02B 7/08

(54) **Underground transformer substation**
Unterirdische Transformatorenstation
Poste de transformation souterrain

(43) Date of publication of application: 01.07.2009
(73) Proprietor: PREFABRICADOS UNIBLOK,S.L.U., 45223 Seseña Toledo (ES)
(72) Inventor: Sabas Fernandez, José Luis, 48140 Igorre (Vizcaya) (ES); Zautua Bilboa, Igor, 48140 Igorre (Vizcaya) (ES); Cormenzana Lopez, Javier, 48140 Igorre (Vizcaya) (ES)
(74) Representative: Carpintero Lopez, Francisco

(56) References cited:
- ES-U- 1 055 376
- US-A- 1 986 619
- US-A- 3 345 449
- US-A- 5 220 484

## Description

### OBJECT OF THE INVENTION

The invention relates to a transformer substation which comprises, on the one hand, an underground part equipped with a transformer and high voltage electrical equipment, and on the other hand, an outer part which comprises in its interior low voltage electrical and/or electronic equipment. As a particular characteristic, the transformer substation comprises a ventilation system which forms part of the underground part and which comprises a cold air inlet and a hot air outlet. Likewise, the ventilation system via said air inlet and outlet channels permits the evacuation of water in the event of flooding of the transformer substation.

### BACKGROUND OF THE INVENTION

Electrical transformer substations are designed to house therein electrical switchgear such as transformers, medium voltage cells which incorporate electrical and electronic equipment used in distribution network facilities for the control and/or protection of the grid, low voltage switchboards which, once the energy has been transformed to the range of low voltage enables distributing to the different consumers the power using control and/or protection equipment, etc. Depending on their situation, the transformer substations may be surface, semi-underground or underground, with the special feature that the underground substations improve the visual appearance of their environment, also enabling the liberation of urban space. Likewise, they improve acoustic contamination and improve the emission of electromagnetic fields.

Underground transformer substations are generally constituted by a shaft of suitable dimensions, which may be civil works or prefabricated nature, both of concrete and of other materials, which remain below ground and wherein are installed the different electrical equipment which constitute the electrical installation of the substation, i.e. transformer, medium voltage cells, low voltage switchboard, etc. This shaft is finished at its upper part with a cover or roof which constitutes the surface whereon it is possible to walk and which is sealed to guarantee good hermeticity to humidity and water. The cover typically comprises manholes for the personnel and for the introduction/extraction of the medium and low voltage electrical equipment. Likewise, on the cover, or as an extension thereof, the devices are placed which permit the ventilation of the transformer substation, such as, for example, ventilation turrets, shafts, etc. In this sense, we can cite the Spanish patent applications ES2157770A1 and ES2181581A1 and the European patent application publ. no. EP0499592A1, wherein underground transformer substations of these characteristics are disclosed.

On the other hand, the transformer substations can be classified in accordance with the need of the operators to access the inside to perform maintenance or operation work. Thus, said substations can be classified as:
- Interior operation. These are those where the operator must go inside the substation to perform his work.
- Exterior operation. The operators perform their work from the outside of the substation without the need to access the inside.

In the case of the underground transformer substations of interior operation, to be able to perform the maintenance and control work of the electrical switchgear housed therein, such as transformers, medium voltage cells, low voltage switchboards, etc. and/or supervising the auxiliary control and/or communication equipment, which permit the possibility of recording the status of each piece of electrical equipment which forms the installation, programming sequences of action, such as, for example, the automatic transfer of lines to minimize power cuts, etc., it is necessary to access the inside the substation. In this way, in the underground transformer substations, the operators must access the underground part, for which reason they usually use a manhole situated on the cover. The access to the interior of the substation is usually uncomfortable, due to the reduced dimensions of said accesses and to the need of having to go up and down ladders. Likewise, the need to have to open the manhole each time maintenance and/or supervision work is performed involves the obligation of cleaning the dirt which may be on the framework of said manhole and may break the hermeticity, and increase the risk of breakage of the seal which guarantees the hermeticity of said access. Furthermore, this class of constructions has the drawback of needing greater height to be able to house, in addition to the equipment, the operators. In this sense, we can cite patent documents which define solutions of this type, such as, for example, ES2157770A1, ES2181581A1 and EP0499592A1 or, for example, that defined in the utility model ES1055376U.

In contrast, the underground transformer substations of exterior operation comprise smaller dimensions, which require less space for their installation and less civil works for the burying thereof. In this sense, as an example of this type of solution, we can cite patent document SE0103122L, which defines a transformer substation with the transformer and the medium voltage cells incorporated in an underground container, the cells being disposed with their front looking to the exterior and located to one side of the transformer, while the low voltage switchboard is disposed in an outer cabinet. In this way, when carrying out a control in the cells, it is sufficient to open the lid of the transformer substation and to make the control from the outside without the need for the operator having to enter the transformer substation. This solution entails the drawback that as it has the medium voltage cells on one side of the transformer, it is necessary to have a greater surface area for the underground construction, and therefore, the civil work is also greater.

On the other hand, the transformer, together with the low voltage switchboard, is the electrical switchgear which provides most heat inside the interior of the transformer substations, for which purpose the underground transformer substations must have devices which permit the ventilation of the transformer substation, it being possible that these devices consist of turrets located in the cover which allow the vertical ventilation or shafts disposed in the sides of the transformer substation which allow the horizontal ventilation. In this sense, the ventilation of the underground transformer substations entails the drawback that, depending on the equipment installed in the transformer substation and the heat generated thereby, a high number of ventilation devices must be installed for optimum cooling, which means the installations are more expensive and there is the need for sufficient space for the installation of said devices.

In order to avoid the problems posed in the previous paragraphs, solutions can be found wherein outside the underground transformer substation is disposed a cabinet which houses the low voltage switchboard and which also serves as a substation ventilation device. An example of this type of substation can be found in European patent applications publ. no. EP1764888A1, EP0499592A1 and in the German patent application DE2158520. The European patent application EP0499592A1 discloses an underground transformer substation consisting of two concrete casings, positioned one within the other, with a cover common to both and mounting the electrical switchgear in the interior of the internal casing, so that the ventilation of the substation is carried out through an exterior cabinet which may house the low voltage switchboard. In the same way, in German patent application DE2158520 the ventilation of the substation is performed through an exterior cabinet.

The solution of European patent application EP0499592A1 relates to a transformer substation wherein the underground part consists of two independent casings, which means that, on the one hand, it is a high cost from the constructive viewpoint because it is necessary to use a high quantity of concrete and due to its complex assembly. On the other hand, both in European patent application EP0499592A1 and in German patent application DE2158520A1, the exterior cabinet is disposed separately from the substation, which involves the need to dispose conduits between both which, from a ventilation standpoint, makes necessary the use of several pipes to be able to guide the cold intake air and hot outlet air of the substation, so that this involves a complex assembly because the introduction of pipes through the walls of the casings must be performed in hermetic manner and the need to use tubes of sufficient diameter so as to introduce and evacuate the cooling air, which entails an increase in costs. Likewise, the use of conduits to be able to communicate the substation with the exterior cabinet, involves an increase in loss of load in the cooling air circulation.

Patent application WO2004084368A1 discloses another example of a transformer substation which comprises, as with the previous examples, an underground part and an outer part. In the underground part is disposed the transformer and the medium voltage switchgear, whilst in the outer part is disposed the low voltage switchboard and meter components. Unlike the examples of previous patents, the solution of WO2004084368A1 consists of two different outer parts, one for the housing of electrical equipment and another for the ventilation of the underground part, which entails the need to have a greater space for its installation and a greater visual impact. Likewise, the passage of the cables from the underground part to the outer part with the electrical equipment must be carried out in an airtight manner to avoid the passage of the hot air, for which reason, in solution WO2004084368A1 the walls of the outer part are insulated by an insulating material which avoids the passage of heat. All these characteristics involve an increase in the cost of the installation and a complex assembly thereof.

Underground transformer substations are subjected to the effects of the elements, in particular to rain water, or in an extreme case to water from, for example, a river which has overflown, etc., which cannot affect the equipment contained inside said substations. Nevertheless, they cannot be totally hermetic as the equipment generates heat which must be dissipated to the outside. In this sense, the systems used for the ventilation of these underground enclosures on occasions are based on the disposal of chimneys or ventilation turrets which emerge with respect to ground level and which create obstacles for the normal circulation on the enclosures of vehicles and pedestrians, considerably limiting the possibilities of practical location of said enclosures. Another type of solution used is shafts disposed on the sides of the transformer substation, said shafts having their base considerably lower than the ventilation inlet and outlet conduits, and which are communicated through their base with the drainage network for the evacuation of water of any nature which accesses thereto. In some cases, such as, for example, in the solution defined in utility model ES1061459U, against abnormal situations whereon the flow of water which access the shafts is greater than the capacity for evacuation thereof, in the ventilation conduits are disposed motorized valves, controlled by level switches situated in the interior of the shafts, so that when the water passes a predetermined level of the shafts, said valves automatically close. This type of solution involves a complex and high cost ventilation system, as well as the temporary cancellation of the ventilation system, which in the case of extension over time in the lowering of the water level, may involve an excessive heating of the equipment contained in the transformer substation. There are solutions, such as that defined in utility model ES1061460U, which provides that the floor of the substation has a certain drop towards one of the corners, where a water extraction pump controlled by a level switch is disposed. This last solution involves the addition of another element in the interior of the substation, which entails the need for greater spaces and an increase in the cost of the installation.

### DESCRIPTION OF THE INVENTION

The present invention relates to an electrical transformer substation, which comprises:
- an underground part situated under a surface of a ground which comprises an underground body with its cover equipped with at least one lid and, at least, one transformer unit, which may comprise one or several transformers, and high voltage electrical equipment, such as, for example, control and/or protection cells, all of them housed in said underground body, which may be of civil works or prefabricated nature, partionable or single-block, it being possible to be of prismatic or cylindrical configuration, both of concrete and of other materials.
- at least one outer part which comprises a hut, which may be of civil works or of prefabricated nature, partionable or single-block, both of concrete and of other materials, and situated above the surface of the ground, it being possible for said outer part to be located directly on the underground part or separate therefrom, said outer part comprising in its interior low voltage electrical and/or electronic equipment, such as, for example, a low voltage switchboard, auxiliary control and/or communication equipment, meters, etc.

The underground part of the transformer substation comprises a ventilation system, which may be carried out naturally and which forms part of the underground part. Said ventilation system comprises at least one cold air inlet and at least one hot air outlet, said channels being between at least one inner side and at least one outer side of at least one wall of the underground body. The inner side defines or delimits an inner space of the underground body. On the other hand, the outer side, which is the side of the underground body in contact with the ground, has at least one part open to said ground, which permits that the water which may enter the interior substation or the air inlet and/or outlet is filtered to the ground naturally by means of drainage or locating a water collection system.

The cold air inlet and the hot air outlet communicate with the outside through at least one grille, it being possible for said perimeter grille to be common for both channels, said grille permitting both the intake of cold air to and the exit of hot air from inside the underground body. This perimeter grille may be situated around the lid of the underground body and may occupy the whole thickness of the wall of the underground body. In this sense, there is no need for external cabinets, chimneys or ventilation turrets which emerge with respect to ground level and create obstacles for the normal transit on the underground part of vehicles and pedestrians. Likewise, since it avoids the use of external cabinets for the ventilation of the underground part, it is not necessary to have conduits between both parts, thus dispensing with pipes to carry the cold intake air and the hot exit air, avoiding load losses in the circulation of the cooling air and facilitating the assembly of the transformer substation.

The cold air inlet may comprise part of the thickness or the total thickness of the wall of the underground body, i.e. the cold air inlet can be disposed around the underground body, completely surrounding or surrounding only part of said body, between the aforementioned perimeter grille and the lower part of said underground body.

With regard to the hot air outlet, this may comprise the full thickness or part of the thickness of at least one wall of the underground body, it being possible for said outlet to be disposed on the upper part of the underground body and therearound, surrounding only part of the perimeter of said body or completely surrounding it, the hot air outlet comprising in this last case at least one cavity whereby it communicates with the cold air inlet, said cavity permitting the passage of the water, which may have entered the outlet, from the hot air outlet to the cold air inlet and, therefore, enabling the evacuation of said water to the ground where the underground body is located or to a water collection system. It covers the possibility that in the event that the hot air outlet surrounds only part of the perimeter of the underground body, this outlet may comprise its lower end open, so that it allows the water that has entered in this channel to be evacuated to the ground, where the underground body is located or to a water collection system.

Furthermore, the ventilation system comprises at least one lower grille disposed on the lower part of at least one inner side of at least one wall of the underground body, so that through said lower grille is permitted the passage of the cold air, from the perimeter grille, from the cold air inlet to the inside the underground body, wherein is housed at least one transformer and the high voltage electrical equipment, thus introducing the cold air under the transformer and guaranteeing its cooling. On the other hand, the hot air of the interior of the underground body exits the interior of said underground body to the hot air outlet through at least one upper grille disposed on the upper part of at least one inner side of at least one wall of the underground body, said hot air being finally evacuated from the hot air outlet to the exterior through the perimeter grille. The, at least one, lower grille and, at least one, upper grille are configured so that they prevent the passage of water and solid foreign bodies to the interior of the underground body, but in contrast they permit the passage of water from the interior to the exterior of the body. Via this ventilation system, furthermore, through its air inlet and outlet, the evacuation of rainwater or, in an extreme case, from a water torrent, etc. is ensured, which may affect the equipment contained in the interior of the underground part.

The underground body may be equipped with a pit for collecting oil from the transformer, comprising a firewall base on said pit where the transformer rests and which allows the passage of the oil from the transformer to said pit. In another sense, the underground body may comprise a cable inlet area and a cable outlet area, as well as interior lighting.

As another particular characteristic of the invention, it includes the possibility that the high voltage electrical equipment housed in the underground part, such as, for example, the control and/or protection cells, are disposed in the upper part of the underground body, the transformer remaining under them. This reduces the surface area necessary for the installation of the underground part, and, therefore, it requires less civil works for the burying thereof. In this sense, both the high voltage electrical equipment and the transformer may be mounted on a structure, for example metal, so that the transformer and said electrical equipment can be installed in the interior of the underground body as a unit, thus facilitating the installation and maintenance works. Likewise, it includes the possibility that said high voltage electrical equipment is disposed with the front in parallel or inclined to the surface of the ground and immediately under the lid of the underground body, so that the control of said electrical equipment as well as the control of the high voltage tap switch of the transformer is performed from the exterior, without it being necessary for the operators to go inside the underground part of the transformer substation.

On the other hand, it has been provided that both the high voltage electrical equipment and the transformer housed in the underground part of the transformer substation are floodable, it being possible in this case for the transformer unit and the high voltage equipment to operate in this case by a cooling system other than air ventilation, i.e. water cooling, thus avoiding in an extreme case of flooding of the underground part that the high voltage electrical equipment and the transformer remain out of service, and in consequence continue operating during the water evacuation period, and even after returning to the normal operating conditions once all the water has been evacuated.

In relation to the outer part of the transformer substation, this can comprise two compartments separated by a wall, so that a first of said compartments houses the low voltage switchboard and a second of said compartments houses the auxiliary equipment. In this sense, it includes the possibility that the transformer substation may be controlled from said outer part or remotely, without it being necessary for the operators to go inside the underground part of the transformer substation. Likewise, it has been provided that said outer part may comprise outer signs indicative of incidents related to the transformer substation.

### DESCRIPTION OF FIGURES

To complement the description being made and with the aim of aiding a better understanding of the characteristics of the invention, in accordance with a preferred practical embodiment thereof, a set of drawings is attached as an integral part of said description, wherein the following has been portrayed for illustrative and not limitative purposes:
- Figure 1. -: Represents a perspective view of the transformer substation in accordance with a preferred embodiment of the invention, wherein it shows, on the one hand, the underground part (5) and, on the other hand, the outer part (6) installed separately from said underground part (5).
- Figure 2. -: Represents a vertical section view of an embodiment of the underground body (1), wherein it shows the ventilation system that said body (1) comprises.
- Figure 3. -: Represents a vertical section view of the underground part (5) according to the embodiment of figure 2, equipped with a transformer (2) and the high voltage electrical equipment (3), and the outer part (6), housing therein the low voltage switchboard (24) and the auxiliary equipment (25).
- Figure 4. -: Represents a vertical section view of a second embodiment of the underground body (1), wherein it shows the ventilation system that said body (1) comprises.

### PREFERRED EMBODIMENT OF THE INVENTION

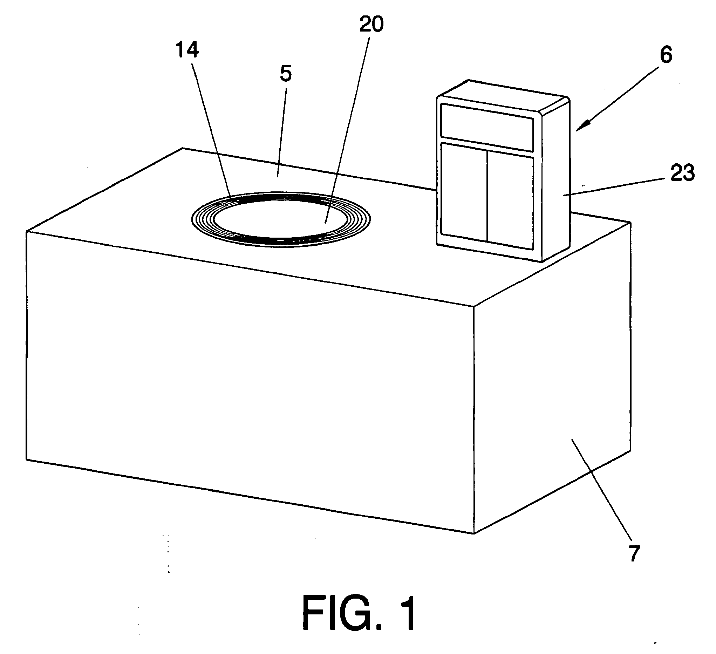

Figure 1 shows an example of embodiment of the transformer substation object of the invention, wherein the transformer substation comprises an underground part (5) and an outer part (6) situated so that it protrudes with respect to the surface of the ground (7) and separate from the underground part (5).

The underground part (5), as shown in figures 1-4, comprises an underground body (1) with its cover (4) equipped with a lid (20), comprising therein, at least, one transformer (2) and high voltage electrical equipment (3), such as, for example, control and/or protection cells. Said underground body (1) may be of civil works or of prefabricated nature, partionable or single-block, and it may be of cylindrical configuration, both of concrete and of other materials.

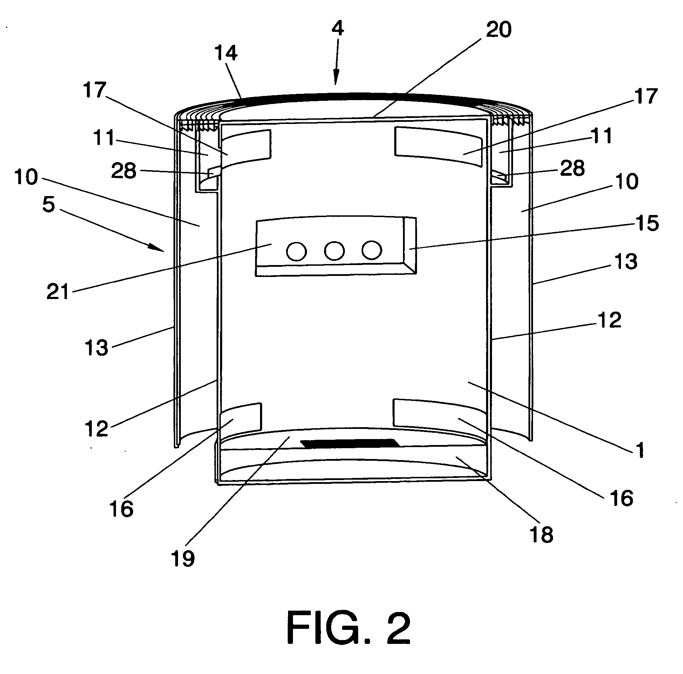

As observed in figures 2-4, the underground part (5) comprises a ventilation system which forms part of the underground body (1), so that said ventilation system comprises a cold air inlet (10) and a hot air outlet (11), said channels (10, 11) being positioned between an inner side (12) and an outer side (13) of a wall (15) of the underground body (1). Both the inlet (10) and the hot air outlet (11) communicate with the outside through a perimeter grille (14), allowing thereby the intake of cold air to the cold air inlet (10) or the exit of hot air to the exterior from the hot air outlet (11). The perimeter grille (14) is disposed situated around of the lid (20) of the underground body (1) and occupies the whole thickness of the wall (15) of the underground body (1).

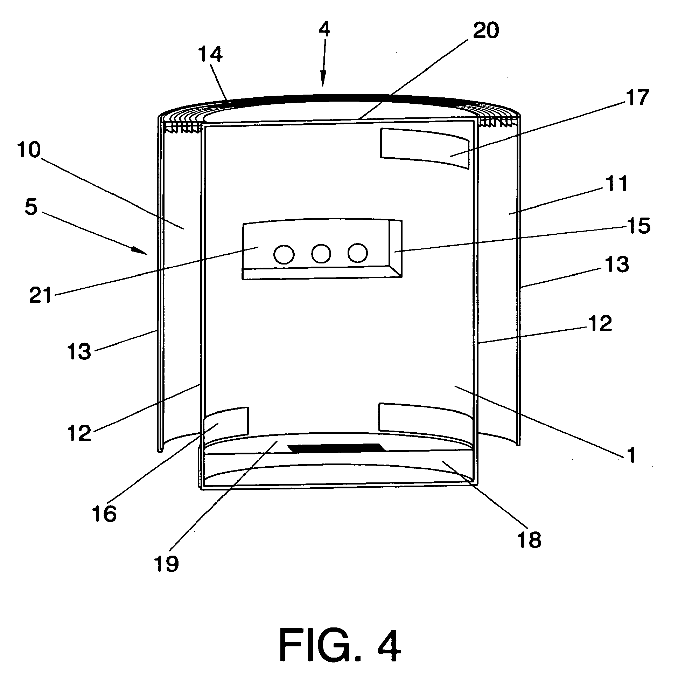

The cold air inlet (10) is disposed around the underground body (1), completely surrounding the underground body (1), as observed in figure 2, or as shown in figure 4 surrounding only part of said body (1), disposed in turn between the aforementioned perimeter grille (14) and the lower part of said underground body (1). The cold air introduced in the cold air inlet (10) circulates towards the lower part of the underground body (1) and through, at least, one lower grille (16) disposed on the lower part of the inner side (12) of the wall (15), it is introduced in the interior of said underground body (1), in this way said cold air entering under the transformer (2) and thus guaranteeing its cooling. On the other hand, the hot air of the interior of the underground body (1) exits the hot air outlet (11) through, at least, one upper grille (17) disposed on the upper part of the inner side (12), said hot air finally exiting to the exterior through the perimeter grille (14). In this sense, the hot air outlet (11) is disposed around the underground body (1), surrounding only part of the underground body (1), as shown in figure 4, or as shown in figure 2 completely surrounding said underground body (1), being positioned in this last case in the upper part of the underground body (1), in this case said hot air outlet (11) being concentric to the cold air inlet (10).

Said grilles (16, 17) are configured to prevent the passage to the interior of the underground body (1) of the water and solid foreign bodies that may enter through the perimeter grille (14) to the interior of the channels (10, 11); but, in contrast, they permit the exit of the water from the interior to the exterior of the underground body (1), such as, for example, in the case of flooding of said underground body (1). In turn, as observed in figures 2-4, the cold air inlet (10) comprises its lower end open, so that it allows that the water introduced in this cold air inlet (10) can evacuated to the ground (7) or to a water collection system. In this sense, in the case of the example of embodiment of the underground body (1) shown in figure 4, the hot air outlet (11) comprises its lower end open, so that it allows the water introduced in this hot air outlet (11) to be evacuated to the ground (7) where the underground (1) is located or to a water collection system.

As observed in the example of embodiment of the underground body (1) of figure 2, the hot air outlet (11) comprises at least one cavity (28) whereby it communicates with the cold air inlet (10), said cavity (28) allowing the passage of water from the hot air outlet (11) to the cold air inlet (10) and therefore enabling the evacuation of said water to the ground (7) or to a water collection system.

Therefore, through the inlet and outlet channels (10, 11) the rainwater or, in an extreme case, a water torrent, etc., can also be evacuated, which may affect the equipment contained in the interior of the underground part (5).

As observed in figures 2-4, the underground body (1) is equipped with a pit (18) for collecting oil from the transformer (2), comprising on said pit (18) a firewall base (19) where the transformer (2) rests and which permits the passage of the oil of the transformer (2) to said pit (18) in the event of a leak.

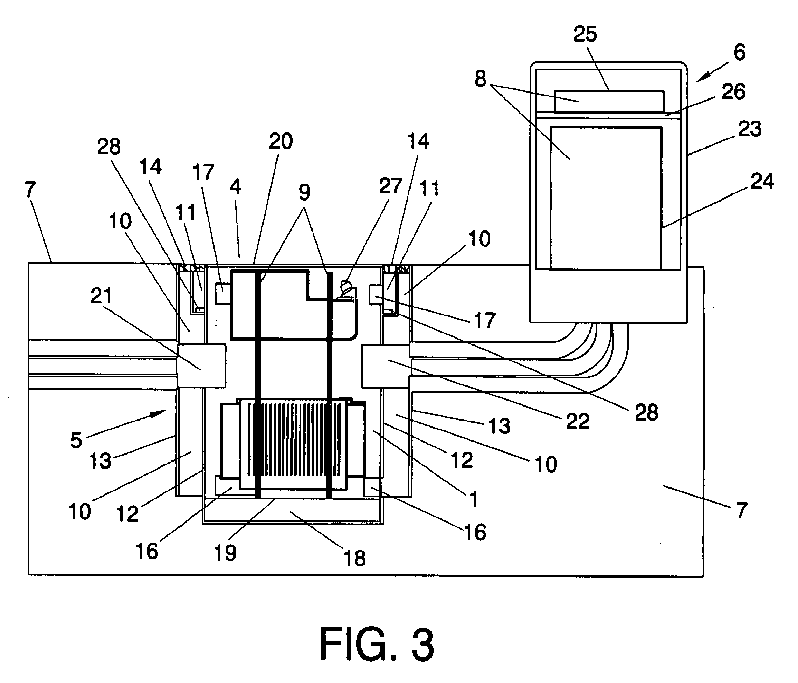

In relation to the electrical switchgear incorporated in the interior of the underground body (1), as shown in figure 3, the high voltage electrical equipment (3), such as, for example, control and/or protection cells, is disposed in the upper part of the underground body (1), the transformer (2) remaining under them. In this way, the surface area necessary for the installation of the underground part (5) is reduced and, therefore, requires less civil works for the burying thereof. In this sense, both the high voltage electrical equipment (3) and the transformer (2) are mounted on a structure (9), for example metal, so that the transformer (2) and said high voltage electrical equipment (3) can be installed in the interior of the underground body (1) as a unit, thus facilitating installation work. Likewise, said high voltage electrical equipment (3) is disposed with the front in parallel or inclined to the surface of the ground (7) and immediately under the lid (20) of the underground body (1), so that the control of said high voltage electrical equipment (3) as well as the control of the collection regulator of the transformer (2) is performed from the exterior, without it being necessary for the operators to go inside the underground part (5) of the transformer substation. To facilitate maintenance and operation work that the operators should perform, it has been planned to provide the underground body (1) with interior lighting (27).

On the other hand, it has been provided that both the high voltage electrical equipment (3) and the transformer (2) housed in the underground part (5) of the transformer substation are floodable, thus avoiding in an extreme case of flooding of the underground part (5) that the high voltage electrical equipment (3) and the transformer (2) remain out of service, and in consequence, continue operating during the water evacuation period, and even after returning to the normal operating conditions once all the water has been evacuated. In the supposed case of flooding, both the transformer (2) unit and the high voltage equipment (3) would operate via a cooling system different to ventilation, i.e. they would operate via water cooling.

In another sense, as observed in figures 2-4, the underground body (1) comprises a cable inlet area (21) and a cable outlet area (22), said cable outlet area (22) being communicated by the corresponding cables with the outer part (6). This outer part (6) comprises a hut (23), which may be of civil works or of prefabricated nature, partionable or single block, both of concrete and of other materials, situated so that it protrudes with respect to the surface of the ground (7) and separate from the underground part (5), this outer part (6) comprising in its interior low voltage electrical and/or electronic equipment (8), such as, for example, a low voltage switchboard (24), auxiliary control and/or communication equipment (25), meters, etc.

As shown in figure 3, the hut (23) comprises two compartments separated by a wall (26), so that a first of said compartments houses the low voltage switchboard (24) and a second of said compartments houses the auxiliary equipment (25). In this sense, it includes the possibility that the transformer substation may be controlled from said outer part (6) or remotely, without it being necessary for the operators to go inside the underground part (5) of the transformer substation. Likewise, it has been provided that said outer part (6) may comprise outer signs indicative of incidents related to the transformer substation.

## Claims

1. Transformer substation for distribution network, which comprises:
an underground part (5) situated under a surface of a ground (7) which comprises an underground body (1) and a cover (4) equipped with at least one lid (20), said underground body (1) comprising in its interior at least one transformer unit (2) and high voltage electrical equipment (3); and
at least one outer part (6), situated above the surface of the ground (7), said outer part (6) comprising an electrical cabinet containing low voltage electrical and/or electronic equipment (8);
**characterized in that** the underground part (5) comprises a perimeter wall that consists of two walls (12. 13), an inner wall (12) defining an inner space of the underground body (1) and an outer wall (13) limiting with the ground, having an air gap in between, and a ventilation system on the perimeter of said underground part (5) equipped with at least one cold air inlet (10) and at least one hot air outlet (11) located on the air gap, said at least one cold air inlet (10) comprising a lower end opened to the ground, so that it allows the water that entered in this channel to be evacuated to the ground (7).

2. Transformer substation for distribution network according to claim 1, **characterized in that** the ventilation system is natural.

3. Transformer substation for distribution network according to any of claims 1-2, **characterized in that** the underground body (1) is of cylindrical configuration.

4. Transformer substation for distribution network according to any of claims 1-2, **characterized in that** the underground body (1) is of prismatic configuration.

5. Transformer substation for distribution network according to claim 3 or 4, **characterized in that** the underground body (1) is configured as a single-block module.

6. Transformer substation for distribution network according to any of claims 1-5, **characterized in that** the cold air inlet (10) and the hot air outlet (11) communicate with the outside through at least one perimeter grille (14) disposed on the highest part of the underground part (5), said perimeter grille (14) situated on the surface of the ground (7) and skirting the lid (20).

7. Transformer substation for distribution network according to claim 6, **characterized in that** the cold air inlet (10) is between the perimeter grille (14) and the lower part of the underground body (1), completely surrounding the underground body (1), so that it allows the circulation of the cold air from the perimeter grille (14) to the lower part of the underground body (1) and around the whole underground part (5).

8. Transformer substation for distribution network according to claim 6, **characterized in that** the cold air inlet (10) is between the perimeter grille (14) and the lower part of the underground body (1), surrounding part of the perimeter of the underground body (1), so that it allows the circulation of the cold air from the perimeter grille (14) to the lower part of the underground body (1) and around said part of the perimeter of the underground body (1).

9. Transformer substation for distribution network according to any of claims 1-8, **characterized in that** the cold air inlet (10) communicates with the interior of the underground body (1) through at least one lower grille (16) disposed on the lower part of the inner wall (12) of the air gap, said lower grille (16) configured to allow the intake of cold air in the interior of said underground body (1) under the transformer (2) guaranteeing its cooling.

10. Transformer substation for distribution network according to claim 9, **characterized in that** the lower grille (16) is configured to prevent the intake of water and solid foreign bodies in the interior of the underground body (1) and allow the exit of water from the interior of the underground body (1).

11. Transformer substation for distribution network according to claim 6, **characterized in that** the hot air outlet (11) is found in the upper part of the underground body (1), completely surrounding the underground body (1), said hot air outlet (11) configured to allow the exit to the exterior of hot air from the interior of the underground body (1).

12. Transformer substation for distribution network according to claim 6, **characterized in that** the hot air outlet (11) is between the perimeter grille (14) and the lower part of the underground body (1), surrounding part of the perimeter of the underground body (1), so that it allows the exit to the exterior of the hot air from the interior of the underground body (1).

13. Transformer substation for distribution network according to claim 12, **characterized in that** the hot air outlet (11) is open at its lower part.

14. Transformer substation for distribution network according to any of claims 1-13, **characterized in that** the hot air outlet (11) communicates with the interior of the underground body (1) through at least one upper grille (17) disposed on the upper part of the inner side (12) of the wall (15).

15. Transformer substation for distribution network according to claim 14, **characterized in that** the upper grille (17) is configured to prevent the intake of water and solid foreign bodies in the interior of the underground body (1).

16. Transformer substation for distribution network according to claim 11, **characterized in that** the hot air outlet (11) communicates with the cold air inlet (10) through at least one cavity (28), said cavity (28) configured to allow the passage of water from the hot air outlet (11) to the cold air inlet (10).

17. Transformer substation for distribution network according to any of claims 1-16, **characterized in that** the, at least one, part of the outer wall (13) open to the ground (7) is communicated with water drainage means.

18. Transformer substation for distribution network according to any of claims 1-16, **characterized in that** the, at least one, part of the outer wall (13) open to the ground (7) is communicated with a water collection system.

19. Transformer substation for distribution network according to any of claims 1-18, **characterized in that** the underground body (1) comprises a pit (18) for collecting oil from the transformer (2).

20. Transformer substation for distribution network according to claim 19, **characterized in that** on the pit (18) there comprises a firewall base (19) whereon the transformer (2) rests, said firewall base (19) configured to allow the passage of the oil from the transformer (2) to the pit (18) in the event of a leak.

21. Transformer substation for distribution network according to any of claims 1-20, **characterized in that** the underground body (1) comprises at least one cable inlet area (21) and at least one cable outlet area (22).

22. Transformer substation for distribution network according to any of claims 1-21, **characterized in that** the high voltage electrical equipment (3) is installed in the upper part of the underground body (1), the transformer (2) remaining under said high voltage electrical equipment (3).

23. Transformer substation for distribution network according to claim 22, **characterized in that** both the transformer (2) and the high voltage electrical equipment (3) are disposed mounted on a structure (9), so that the transformer (2) and the high voltage electrical equipment (3) are installed in the interior of the underground body (1) as a unit.

24. Transformer substation for distribution network according to claim 23, **characterized in that** the plane of the front of the high voltage electrical equipment (3) is disposed in parallel or inclined to the surface of the ground (7) and immediately under the lid (20), so that the control of said high voltage electrical equipment (3) is performed from said surface of the ground (7) without it being necessary for the operators to go inside the underground body (1).

25. Transformer substation for distribution network according to any of claims 1-24, **characterized in that** both the transformer (2) and the high voltage electrical equipment (3) are floodable.

26. Transformer substation for distribution network according to any of claims 1-25, **characterized in that** the underground part (5) comprises interior lighting (27).

27. Transformer substation for distribution network according to any of claims 1-26, **characterized in that** the outer part (6) comprises a cabinet (23) which is disposed separate from the underground part (5).

28. Transformer substation for distribution network according to claim 27, **characterized in that** the cabinet (23) is configured as a single-block module.

29. Transformer substation for distribution network according to any of claims 27-28, **characterized in that** the low voltage electrical equipment (8) which is housed in said outer part (6) comprise a low voltage switchboard (24).

30. Transformer substation for distribution network according to claim 29, **characterized in that** the low voltage electrical equipment (8) which is housed in said outer part (6) comprise equipment selected from auxiliary control equipment, communication equipment and meters (25).

31. Transformer substation for distribution network according to claim 27, **characterized in that** the outer part (6) comprises outer signs indicative of incidents related to the transformer substation.

32. Transformer substation for distribution network according to claim 30, **characterized in that** the outer part (6) comprises two compartments separated by a wall (26), with a first compartment which houses the low voltage switchboard (24) and a second compartment which houses the auxiliary equipment (25).

33. Transformer substation for distribution network according to claim 32, **characterized in that** the high voltage electrical equipment (3) is controlled from the low voltage electrical equipment (8) housed in the outer part (6) or remotely.

## Patentansprüche

1. Transformatorenstation für ein Verteilnetz, die Folgendes umfasst:
einen unterhalb einer Oberfläche eines Bodens (7) gelegenen unterirdischen Teil (5), der einen unterirdischen Aufbau (1) und eine Abdeckung (4) umfasst, die mit zumindest einem Deckel (20) versehen ist, wobei der unterirdische Aufbau (1) in seinem Inneren zumindest eine Transformatoreneinheit (2) und zumindest eine elektrische Hochspannungseinrichtung (3) umfasst;
und
zumindest einen oberhalb der Oberfläche des Bodens (7) gelegenen äußeren Teil (6), wobei der äußere Teil (6) einen Schaltschrank mit elektrischen und/oder elektronischen Niederspannungseinrichtungen (8) umfasst;
**dadurch gekennzeichnet, dass** der unterirdische Teil (5) eine Umfangswand umfasst, die aus zwei Wänden (12, 13) besteht, einer einen Innenraum des unterirdischen Aufbaus (1) definierenden Innenwand (12) und einer durch den Boden begrenzten Außenwand (13), mit einem dazwischen liegenden Luftspalt, und mit einem Belüftungssystem am Umfang des unterirdischen Teils (5), das mit zumindest einer Kaltluftzuführung (10) und zumindest einem am Luftspalt liegenden Warmluftauslass (11) versehen ist, wobei die zumindest eine Kaltluftzuführung (10) ein zum Boden hin geöffnetes unteres Ende umfasst, sodass es ermöglicht wird, dass Wasser, das in diesen Kanal eingetreten ist, zum Boden (7) hin abfließen kann.

2. Transformatorenstation für ein Verteilnetz nach Anspruch 1, **dadurch gekennzeichnet, dass** es sich um ein natürliches Belüftungssystem handelt.

3. Transformatorenstation für ein Verteilnetz nach einem der Ansprüche 1 bis 2, **dadurch gekennzeichnet, dass** der unterirdische Aufbau (1) von zylindrischer Gestalt ist.

4. Transformatorenstation für ein Verteilnetz nach einem der Ansprüche 1 bis 2, **dadurch gekennzeichnet, dass** der unterirdische Aufbau (1) von prismatischer Gestalt ist.

5. Transformatorenstation für ein Verteilnetz nach Anspruch 3 oder 4, **dadurch gekennzeichnet, dass** der unterirdische Aufbau (1) als Einzelblockmodul gestaltet ist.

6. Transformatorenstation für ein Verteilnetz nach einem der Ansprüche 1 bis 5, **dadurch gekennzeichnet, dass** die Kaltluftzuführung (10) und der Warmluftauslass (11) mit dem äußeren Bereich über zumindest ein Umfangsgitter (14), das am obersten Bereich des unterirdischen Teils (5) angeordnet ist, verbunden sind, wobei das Umfangsgitter (14) an der Oberfläche des Bodens (7) gelegen ist und den Deckel (20) umgibt.

7. Transformatorenstation für ein Verteilnetz nach Anspruch 6, **dadurch gekennzeichnet, dass** die Kaltluftzuführung (10) zwischen dem Umfangsgitter (14) und dem unteren Bereich des unterirdischen Aufbaus (1) angeordnet ist, den unterirdischen Aufbau (1) dabei vollständig umschließt, sodass die Zirkulation der Kaltluft vom Umfangsgitter (14) zum unteren Bereich des unterirdischen Aufbaus (1) und um den gesamten unterirdischen Teil (5) herum ermöglicht wird.

8. Transformatorenstation für ein Verteilnetz nach Anspruch 6, **dadurch gekennzeichnet, dass** die Kaltluftzuführung (10) zwischen dem Umfangsgitter (14) und dem unteren Bereich des unterirdischen Aufbaus (1) angeordnet ist, den Umfang des unterirdischen Aufbaus (1) dabei teilweise umschließt, sodass die Zirkulation der Kaltluft vom Umfangsgitter (14) zum unteren Bereich des unterirdischen Aufbaus (1) und um den betreffenden Teil des Umfangs des unterirdischen Aufbaus (1) herum ermöglicht wird.

9. Transformatorenstation für ein Verteilnetz nach einem der Ansprüche 1 bis 8, **dadurch gekennzeichnet, dass** die Kaltluftzuführung (10) mit dem inneren Bereich des unterirdischen Aufbaus (1) über zumindest ein unteres Gitter (16), das am unteren Bereich der Innenwand (12) des Luftspaltes angeordnet ist, verbunden ist, wobei das untere Gitter (16) so gestaltet ist, dass es den Eintritt von Kaltluft in den inneren Bereich des unterirdischen Aufbaus (1) unter dem Transformator (2) ermöglicht und so dessen Kühlung sicherstellt.

10. Transformatorenstation für ein Verteilnetz nach Anspruch 9, **dadurch gekennzeichnet, dass** das untere Gitter (16) so gestaltet ist, dass es den Eintritt von Wasser und festen Fremdkörpern in den inneren Bereich des unterirdischen Aufbaus (1) verhindert und den Austritt von Wasser aus dem inneren Bereich des unterirdischen Aufbaus (1) ermöglicht.

11. Transformatorenstation für ein Verteilnetz nach Anspruch 6, **dadurch gekennzeichnet, dass** sich der Warmluftauslass (11) im oberen Bereich des unterirdischen Aufbaus (1) befindet, den unterirdischen Aufbau (1) dabei vollständig umschließt, wobei der Warmluftauslass (11) so gestaltet ist, dass er den Austritt von warmer Luft nach außen aus dem inneren Bereich des unterirdischen Aufbaus (1) ermöglicht.

12. Transformatorenstation für ein Verteilnetz nach Anspruch 6, **dadurch gekennzeichnet, dass** der Warmluftauslass (11) zwischen dem Umfangsgitter (14) und dem unteren Bereich des unterirdischen Aufbaus (1) angeordnet ist, den Umfang des unterirdischen Aufbaus (1) dabei teilweise umschließt, sodass er den Austritt von warmer Luft nach außen aus dem inneren Bereich des unterirdischen Aufbaus (1) ermöglicht.

13. Transformatorenstation für ein Verteilnetz nach Anspruch 12, **dadurch gekennzeichnet, dass** der Warmluftauslass (11) an seinem unteren Bereich geöffnet ist.

14. Transformatorenstation für ein Verteilnetz nach einem der Ansprüche 1 bis 13, **dadurch gekennzeichnet, dass** der Warmluftauslass (11) mit dem inneren Bereich des unterirdischen Aufbaus (1) über zumindest ein oberes Gitter (17), das am oberen Bereich der Innenseite (12) der Wand (15) angeordnet ist, verbunden ist.

15. Transformatorenstation für ein Verteilnetz nach Anspruch 14, **dadurch gekennzeichnet, dass** das obere Gitter (17) so gestaltet ist, dass es den Eintritt von Wasser und festen Fremdkörpern in den inneren Bereich des unterirdischen Aufbaus (1) verhindert.

16. Transformatorenstation für ein Verteilnetz nach Anspruch 11, **dadurch gekennzeichnet, dass** der Warmluftauslass (11) mit der Kaltluftzuführung (10) über zumindest eine Ausnehmung (28) verbunden ist, wobei die Ausnehmung (28) so gestaltet ist, dass sie den Durchfluss von Wasser vom Warmluftauslass (11) zur Kaltluftzuführung (10) ermöglicht.

17. Transformatorenstation für ein Verteilnetz nach einem der Ansprüche 1 bis 16, **dadurch gekennzeichnet, dass** der zumindest eine Bereich der Außenwand (13), der zum Boden (7) hin geöffnet ist, mit einem Wasserablaufsystem verbunden ist.

18. Transformatorenstation für ein Verteilnetz nach einem der Ansprüche 1 bis 16, **dadurch gekennzeichnet, dass** der zumindest eine Bereich der Außenwand (13), der zum Boden (7) hin geöffnet ist, mit einem Wasseraufnahmesystem verbunden ist.

19. Transformatorenstation für ein Verteilnetz nach einem der Ansprüche 1 bis 18, **dadurch gekennzeichnet, dass** der unterirdische Aufbau (1) einen Schacht (18) zur Aufnahme von Öl vom Transformator (2) umfasst.

20. Transformatorenstation für ein Verteilnetz nach Anspruch 19, **dadurch gekennzeichnet, dass** der Schacht (18) eine Feuerschutzwandbasis (19) umfasst, auf der der Transformator abgestützt ist, wobei die Feuerschutzwandbasis (19) so gestaltet ist, dass sie den Durchfluss des Öls vom Transformator (2) zum Schacht (18) im Falle eines Lecks ermöglicht.

21. Transformatorenstation für ein Verteilnetz nach einem der Ansprüche 1 bis 20, **dadurch gekennzeichnet, dass** der unterirdische Aufbau (1) zumindest einen Kabeleingangsbereich (21) und zumindest einen Kabelausgangsbereich (22) umfasst.

22. Transformatorenstation für ein Verteilnetz nach einem der Ansprüche 1 bis 21, **dadurch gekennzeichnet, dass** die elektrische Hochspannungseinrichtung (3) im oberen Bereich des unterirdischen Aufbaus (1) installiert ist und der Transformator (2) unter der elektrischen Hochspannungseinrichtung (3) verbleibt.

23. Transformatorenstation für ein Verteilnetz nach Anspruch 22, **dadurch gekennzeichnet, dass** sowohl der Transformator (2) als auch die elektrische Hochspannungseinrichtung (3) auf einer Konstruktion (9) gelagert sind, sodass der Transformator (2) und die elektrische Hochspannungseinrichtung (3) im inneren Bereich des unterirdischen Aufbaus (1) als Einheit installiert sind.

24. Transformatorenstation für ein Verteilnetz nach Anspruch 23, **dadurch gekennzeichnet, dass** die Ebene der Vorderseite der elektrischen Hochspannungseinrichtung (3) parallel oder geneigt zur Oberfläche des Bodens (7) und unmittelbar unterhalb des Deckels (20) angeordnet ist, sodass die Steuerung der elektrischen Hochspannungseinrichtung (3) von der Oberfläche des Bodens (7) aus erfolgen kann, ohne dass das Bedienpersonal den unterirdischen Aufbau (1) betreten muss.

25. Transformatorenstation für ein Verteilnetz nach einem der Ansprüche 1 bis 24, **dadurch gekennzeichnet, dass** sowohl der Transformator (2) als auch die elektrische Hochspannungseinrichtung (3) geflutet werden können.

26. Transformatorenstation für ein Verteilnetz nach einem der Ansprüche 1 bis 25, **dadurch gekennzeichnet, dass** der unterirdische Teil (5) eine Innenbeleuchtung (27) umfasst.

27. Transformatorenstation für ein Verteilnetz nach einem der Ansprüche 1 bis 26, **dadurch gekennzeichnet, dass** der äußere Teil (6) einen Schaltschrank (23) umfasst, der getrennt vom unterirdischen Teil (5) angeordnet ist.

28. Transformatorenstation für ein Verteilnetz nach Anspruch 27, **dadurch gekennzeichnet, dass** der Schaltschrank (23) als Einzelblockmodul gestaltet ist.

29. Transformatorenstation für ein Verteilnetz nach einem der Ansprüche 27 bis 28, **dadurch gekennzeichnet, dass** die elektrische Niederspannungseinrichtung (8), die sich im äußeren Teil (6) befindet, eine Niederspannungs-Schalttafel (24) umfasst.

30. Transformatorenstation für ein Verteilnetz nach Anspruch 29, **dadurch gekennzeichnet, dass** die elektrische Niederspannungseinrichtung (8), die sich im äußeren Teil (6) befindet, Geräte umfasst, die wahlweise Hilfssteuergeräte, Übertragungsgeräte und Messgeräte (25) sein können.

31. Transformatorenstation für ein Verteilnetz nach Anspruch 27, **dadurch gekennzeichnet, dass** der äußere Teil (6) äußere Hinweistafeln umfasst, die auf Vorkommnisse im Zusammenhang mit der Transformatorenstation hinweisen.

32. Transformatorenstation für ein Verteilnetz nach Anspruch 30, **dadurch gekennzeichnet, dass** der äußere Teil (6) zwei Abschnitte umfasst, die durch eine Wand (26) getrennt sind, mit einem ersten Abschnitt, in dem sich die Niederspannungs-Schalttafel (24) befindet, und einem zweiten Abschnitt, in dem sich das Hilfssteuergerät (25) befindet.

33. Transformatorenstation für ein Verteilnetz nach Anspruch 32, **dadurch gekennzeichnet, dass** die elektrische Hochspannungseinrichtung (3) mittels der Niederspannungseinrichtung (8), die sich im äußeren Teil (6) befindet, oder aus der Ferne gesteuert wird.

## Revendications

1. Poste de transformation pour réseau de distribution comprenant :
une partie souterraine (5) située sous la surface d'un sol (7) qui comprend un corps souterrain (1) et un cache (4) équipé d'au moins un couvercle (20), ledit corps souterrain (1) comprenant dans son intérieur au moins une unité de transformation (2) et un équipement électrique à haute tension (3) ; et
au moins une partie externe (6) située au-dessus de la surface du sol (7), ladite partie externe (6) comprenant une armoire électrique contenant l'équipement électrique à basse tension et/ou électronique (8) ;
**caractérisé en ce que** la partie souterraine (5) comprend une paroi périmétrale qui est constituée de deux parois (12, 13), une paroi interne (12) définissant un espace interne du corps souterrain (1) et une paroi externe (13) représentant la limite avec le sol, ayant une lame d'air entre elles, et un système de ventilation sur le périmètre de ladite partie souterraine (5) équipé avec au moins une entrée d'air froid (10) et au moins une sortie d'air chaud (11) positionnées sur la lame d'air, ladite au moins une entrée d'air froid (10) comprenant une extrémité inférieure ouverte sur le sol, de sorte que l'eau qui est entrée par cette voie puisse être évacuée vers le sol (7).

2. Poste de transformation pour réseau de distribution selon la revendication 1, **caractérisé en ce que** le système de ventilation est naturel.

3. Poste de transformation pour réseau de distribution selon l'une quelconque des revendications 1 à 2, **caractérisé en ce que** le corps souterrain (1) a une configuration cylindrique.

4. Poste de transformation pour réseau de distribution selon l'une quelconque des revendications 1 à 2, **caractérisé en ce que** le corps souterrain (1) a une configuration prismatique.

5. Poste de transformation pour réseau de distribution selon la revendication 3 ou 4, **caractérisé en ce que** le corps souterrain (1) est configuré sous la forme d'un module monobloc.

6. Poste de transformation pour réseau de distribution selon l'une quelconque des revendications 1 à 5, **caractérisé en ce que** l'entrée d'air froid (10) et la sortie d'air chaud (11) communiquent avec l'extérieur au travers d'au moins une grille périmétrale (14) disposée sur la partie la plus haute de la partie souterraine (5), ladite grille périmétrale (14) étant située sur la surface du sol (7) et contournant le couvercle (20).

7. Poste de transformation pour réseau de distribution selon la revendication 6, **caractérisé en ce que** l'entrée d'air froid (10) est entre la grille périmétrale (14) et la partie inférieure du corps souterrain (1), entourant complètement le corps souterrain (1), de sorte qu'elle permet la circulation de l'air froid de la grille périmétrale (14) jusqu'à la partie inférieure du corps souterrain (1) et autour de toute la partie souterraine (5).

8. Poste de transformation pour réseau de distribution selon la revendication 6, **caractérisé en ce que** l'entrée d'air froid (10) est entre la grille périmétrale (14) et la partie inférieure du corps souterrain (1), entourant une partie du périmètre du corps souterrain (1), de sorte qu'elle permet la circulation de l'air froid de la grille périmétrale (14) jusqu'à la partie inférieure du corps souterrain (1) et autour de ladite partie du périmètre du corps souterrain (1).

9. Poste de transformation pour réseau de distribution selon l'une quelconque des revendications 1 à 8, **caractérisé en ce que** l'entrée d'air froid (10) communique avec l'intérieur du corps souterrain (1) au travers d'au moins une grille inférieure (16) disposée sur la partie inférieure de la paroi interne (12) de la lame d'air, ladite grille inférieure (16) étant configurée pour permettre l'admission d'air froid à l'intérieur dudit corps souterrain (1) sous le transformateur (2), ce qui garantit son refroidissement.

10. Poste de transformation pour réseau de distribution selon la revendication 9, **caractérisé en ce que** la grille inférieure (16) est configurée pour empêcher l'admission d'eau et de corps étrangers solides à l'intérieur du corps souterrain (1) et permettre la sortie d'eau depuis l'intérieur du corps souterrain (1).

11. Poste de transformation pour réseau de distribution selon la revendication 6, **caractérisé en ce que** l'on trouve la sortie d'air chaud (11) dans la partie supérieure du corps souterrain (1), entourant complètement le corps souterrain (1), ladite sortie d'air chaud (11) étant configurée pour permettre la sortie vers l'extérieur de l'air chaud depuis l'intérieur du corps souterrain (1).

12. Poste de transformation pour réseau de distribution selon la revendication 6, **caractérisé en ce que** la sortie d'air chaud (11) est entre la grille périmétrale (14) et la partie inférieure du corps souterrain (1), entourant une partie du périmètre du corps souterrain (1), de sorte qu'elle permet la sortie vers l'extérieur de l'air chaud depuis l'intérieur du corps souterrain (1).

13. Poste de transformation pour réseau de distribution selon la revendication 12, **caractérisé en ce que** la sortie d'air chaud (11) est ouverte au niveau de sa partie inférieure.

14. Poste de transformation pour réseau de distribution selon l'une quelconque des revendications 1 à 13, **caractérisé en ce que** la sortie d'air chaud (11) communique avec l'intérieur du corps souterrain (1) au travers d'au moins une grille supérieure (17) disposée sur la partie supérieure du côté interne (12) de la paroi (15).

15. Poste de transformation pour réseau de distribution selon la revendication 14, **caractérisé en ce que** la grille supérieure (17) est configurée pour empêcher l'admission d'eau et de corps étrangers solides à l'intérieur du corps souterrain (1).

16. Poste de transformation pour réseau de distribution selon la revendication 11, **caractérisé en ce que** la sortie d'air chaud (11) communique avec l'entrée d'air froid (10) par au moins une cavité (28), ladite cavité (28) étant configurée pour permettre le passage de l'eau depuis la sortie d'air chaud (11) vers l'entrée d'air froid (10).

17. Poste de transformation pour réseau de distribution selon l'une quelconque des revendications 1 à 16, **caractérisé en ce que** la au moins une partie de la paroi externe (13) ouverte sur le sol (7) communique avec des moyens de drainage d'eau.

18. Poste de transformation pour réseau de distribution selon l'une quelconque des revendications 1 à 16, **caractérisé en ce que** la au moins une partie de la paroi externe (13) ouverte sur le sol (7) communique avec un système de collecte d'eau.

19. Poste de transformation pour réseau de distribution selon l'une quelconque des revendications 1 à 18, **caractérisé en ce que** le corps souterrain (1) comprend une fosse (18) pour collecter l'huile provenant du transformateur (2).

20. Poste de transformation pour réseau de distribution selon la revendication 19, **caractérisé en ce que** sur la fosse (18) on trouve une base coupe-feu (19) sur laquelle le transformateur (2) repose, ladite base coupe-feu (19) étant configurée pour permettre le passage de l'huile, depuis le transformateur (2) vers la fosse (18) en cas de fuite.

21. Poste de transformation pour réseau de distribution selon l'une quelconque des revendications 1 à 20, **caractérisé en ce que** le corps souterrain (1) comprend au moins une zone d'entrée de câble (21) et au moins une zone de sortie de câble (22).

22. Poste de transformation pour réseau de distribution selon l'une quelconque des revendications 1 à 21, **caractérisé en ce que** l'équipement électrique à haute tension (3) est installé dans la partie supérieure du corps souterrain (1), le transformateur (2) restant sous ledit équipement électrique à haute tension (3).

23. Poste de transformation pour réseau de distribution selon la revendication 22, **caractérisé en ce que** le transformateur (2) et l'équipement électrique à haute tension (3) sont tous les deux montés sur une structure (9), de sorte que le transformateur (2) et l'équipement électrique à haute tension (3) sont installés à l'intérieur du corps souterrain (1) sous la forme d'une unité.

24. Poste de transformation pour réseau de distribution selon la revendication 23, **caractérisé en ce que** le plan de l'avant de l'équipement électrique à haute tension (3) est disposé parallèle ou incliné par rapport à la surface du sol (7) et immédiatement sous le couvercle (20), de sorte que la commande dudit équipement électrique à haute tension (3) est réalisée à partir de ladite surface du sol (7) sans que les opérateurs ne soient obligés d'aller dans le corps souterrain (1).

25. Poste de transformation pour réseau de distribution selon l'une quelconque des revendications 1 à 24, **caractérisé en ce que** le transformateur (2) et l'équipement électrique à haute tension (3) sont tous les deux noyables.

26. Poste de transformation pour réseau de distribution selon l'une quelconque des revendications 1 à 25, **caractérisé en ce que** la partie souterraine (5) comprend un éclairage intérieur (27).

27. Poste de transformation pour réseau de distribution selon l'une quelconque des revendications 1 à 26, **caractérisé en ce que** la partie externe (6) comprend une armoire (23) qui est disposée séparément de la partie souterraine (5).

28. Poste de transformation pour réseau de distribution selon la revendication 27, **caractérisé en ce que** l'armoire (23) est configurée sous la forme d'un module monobloc.

29. Poste de transformation pour réseau de distribution selon l'une quelconque des revendications 27 à 28, **caractérisé en ce que** l'équipement électrique à basse tension (8) qui est logé dans ladite partie externe (6) comprend un tableau de contrôle à basse tension (24).

30. Poste de transformation pour réseau de distribution selon la revendication 29, **caractérisé en ce que** l'équipement électrique à basse tension (8) qui est logé dans ladite partie externe (6) comprend un équipement choisi parmi un équipement de contrôle auxiliaire, un équipement de communication et des compteurs (25).

31. Poste de transformation pour réseau de distribution selon la revendication 27, **caractérisé en ce que** la partie externe (6) comprend des signes externes indiquant les incidents liés au poste de transformation.

32. Poste de transformation pour réseau de distribution selon la revendication 30, **caractérisé en ce que** la partie externe (6) comprend deux compartiments séparés par une paroi (26), avec un premier compartiment qui loge le tableau de commande à basse tension (24) et un second compartiment qui loge l'équipement auxiliaire (25).

33. Poste de transformation pour réseau de distribution selon la revendication 32, **caractérisé en ce que** l'équipement électrique à haute tension (3) est contrôlé à partir de l'équipement électrique à basse tension (8) logé dans la partie externe (6) ou à distance.
